# EUROPEAN PATENT SPECIFICATION

(11) **EP 2 692 923 B1**
(45) Date of publication and mention of the grant of the patent: **18.07.2018**
(21) Application number: 13178654.3
(22) Date of filing: 31.07.2013
(51) Int. Cl.: D04H 1/54, D04H 5/06, D04H 1/498, D04H 1/485, D04H 5/03, D04H 1/492

(54) **Nonwoven Materials Containing Polylactic Acid**
Vliesstoffe enthaltend Polymilchsäure
Tissus non-tissés contentant acide polylactique

(30) Priority: 31.07.2012 IT MI20121341
(43) Date of publication of application: 05.02.2014
(73) Proprietor: Suominen Corporation, 00180 Helsinki (FI)
(72) Inventor: Polosa, Gianluca, FI-00180 HELSINKI (FI); Pedoja, Roberto, FI-00180 HELSINKI (FI)
(74) Representative: Seppo Laine Oy

(56) References cited:
- EP-A1- 0 557 678
- EP-A1- 1 524 350
- WO-A1-2006/011167
- WO-A1-2010/039579
- DE-A1- 10 004 448
- US-A- 5 208 098
- US-A- 5 244 482
- Albrecht, Fuchs, Kittelmann: "Nonwoven Fabrics", 1 January 2003 (2003-01-01), Wiley-VCH, Weinheim, XP002691349, ISBN: 3-527-30406-1 * page 191 *

## Description

The present invention relates to the field of non-woven textile products and is applied to the manufacture of nonwoven fabrics, particularly general nonwoven products, for various applications such as household use, personal and hygienic care. In particular, the present invention is applied to the manufacture of wipes and cleaning cloths.

Wet or impregnated wipes are of wide application in several fields. For example, nonwoven fabric cloths are used for cleaning purposes and may be impregnated with waxes or other cleaning solutions. Wet wipes are also used for personal care and may contain detergents, perfumes or even cosmetic lotions or creams.

These products are normally made from cellulose-based raw materials (typically less than 50% cellulose), such as pulp, carded viscose/lyocell airlace or spunlace, cotton and the like, which are provided with absorbent properties.

High absorbent properties are necessary for the cloth to be wetted and retain a sufficiently high amount of the substance solution of the desired type (detergent, cosmetic and so on).

The above raw material fibres are generally hydroentangled or firmly bonded and are wetted with the solution of detergent and/or perfume, so that they can be packaged ready for use.

Pulp, viscose and lyocell absorb high amounts of water into the fibre. A stack of wet wipes with these fibres tends to be dense and its height is less than for similar wipes containing thermoplastic fibres such as polypropylene and polyester. As wet wipes are commonly packed in flexible plastic packagings, a small height of wipes will give customers a negative impression of the amount of material in the package. Additionally, a softer wipe is more appreciable by the customer due to its better feeling.

Moreover, a certain amount of polypropylene, polyester or the like is normally added to this kind of products. The presence of such thermoplastic materials in the composition of a wipe is contrary to the aim of providing biodegradable products.

Biodegradability is considered an important feature for a wet wipe. The same nature of these products implies that they should be flushable. Therefore, it is normally required to a flushable product to be biodegradable.

However, biodegradability is not the only requirement that should be ideally fulfilled when providing a flushable wipe. As waste waters are normally made to pass through pumps, particularly when they must be moved against the gravity force, for example when they reach waste treatment plants, the material should also be water dispersible to avoid that suck pumps are blocked by the solid mass. Improved water dispersability can be achieved while sacrificing the strength of the material. Biodegradability implies a long period of exposure to environmental conditions to be exercised, but water dispersability is needed in a short time. While looking at the known products on the market, a good balance between water dispersability and mechanical strength is still an open need in this field. It should be considered that a mechanical stress on a sheet of nonwoven material develops along two preferential directions that are perpendicular one to the other: the MD (Machine Direction) and the CD (Cross Direction). The MD is the direction along which the material is processed: a high strength along this direction avoids that the sheet is torn during the production of the wipes. The CD direction conversely is the direction along which the wipe is dispensed by the packaging, i.e. the direction along which the customer pull the wipe out, as required by the current packaging processes. A good strength along this direction is essential as well. It is therefore important that a good balance between MD and CD strengths is obtained. This problem too is far to be solved by the prior art products.

It is therefore an object of the present invention to provide a nonwoven fabric material that is biodegradable.

It is a further object of the invention to provide a nonwoven fabric material that is water dispersible to suck an extent that it can be used as a flushable product.

Another object of the invention is a nonwoven fabric material having improved mechanical properties and in particular a good balance between MD and CD strength. A still further object of the invention is a nonwoven fabric material having a good softness and an appreciable height even when wet.

Another object of the invention are wet wipes having a nice appearance and a balanced MD/CD strength ratio and that in addition are flushable.

Further characteristics and the advantages of this invention will be better understood from the following detailed description of some embodiments thereof, which are provided by way of non-limiting examples wherein:
Figure 1 illustrates by way of a schematic view a first embodiment of the process of the invention;
Figure 2 illustrates by way of a schematic view a second embodiment of the process of the invention;
Figure 3 illustrates by way of a schematic view a third embodiment of the process of the invention;
Figure 4 illustrates by way of a schematic view a fourth embodiment of the process of the invention;
Figure 5 illustrates by way of a schematic view a fifth embodiment of the process of the invention;
Figure 6 illustrates by way of a schematic view a sixth embodiment of the process of the invention;
Figure 7 illustrates a calendering pattern according to the invention;
Figure 7A illustrates the section along the direction A-A of a particular of the engraving pattern of figure 7;
Figure 8 illustrates an engraving pattern according to the prior art that is provided as a comparison. In certain embodiments, the nonwoven fabric material of the invention is a material comprising at least one layer of long fibres or of continuous filaments of a biodegradable material.

With the term "biodegradable material" it is meant either a biodegradable material as such or a compostable material.

In certain embodiments, the nonwoven fabric material of the invention is a multi-layered material according to claim 1 comprising at least one layer of long fibres or of continuous filaments of a biodegradable material and at least one layer of fibers of a water-absorbent material.

The amount of long fibres in the material of the invention may vary between 20% and 100% by weight.

In certain embodiments, the nonwoven fabric material of the invention is a multi-layered material comprising at least one layer of long fibres or of continuous filaments of a biodegradable material and at least one layer of short fibres or shortcut fibres of the same or of a different material.

The term "long fibres" means fibres having a length that may vary from about 4 mm to about 60 mm, preferably from 15 to 40 mm.

The term "short fibres" means fibres having a length that may vary from substantially 0, i.e. powder, to 2.5 mm, preferably from 1 to 2 mm.

The term "shortcut fibres" means fibres having a length that may vary from about 5 to about 10 mm.

The term "continuous filament" generally means a filament of a polymer obtained by the spunbond technique. Continuous filaments will preferably have a diameter between 0.5 dtex and 6.7 dtex, preferably a diameter of between 0.9 and 2.5 dtex. The long fibres material is polylactic acid (PLA), optionally as a bicomponant fiber, or mixtures of PLA and viscose, lyocell, or biopolymers from cereals or plant fibres.

The term "bicomponent fibre" means a fibre obtained by co-extrusion of two different polymers. They are also called "conjugate fibres". Non-limiting examples of bicomponent filament configurations include sheath-core (concentric or eccentric), side-by-side (equal or unequal portions), and islands-in-a-sea.

Non-exhaustive examples of short fibres material are cellulose pulp, cotton and mixtures thereof. Non-exhaustive examples of shortcut fibre material are viscose, lyocell and synthetic fibres. The term "synthetic fibres" means for example fibres of polyester and polypropylene.

Non-exhaustive examples of continuous filaments material are continuous filaments of polylactic acid (PLA).

The nonwoven fabric material of the invention contains an amount of polylactic acid greater than 10% by weight, more preferably greater than 30% by weight. In certain embodiments, the nonwoven fabric material of the invention contains an amount of long fibres material comprised in the range of 40% to 60% by weight. In some of these embodiments, the amount of cellulose pulp in the nonwoven fabric material is comprised in the range of 40% to 60% by weight.

In certain embodiments, the nonwoven fabric material of the invention contains a total amount of long fibres material and cotton of about 100% by weight (no cellulose pulp is contained).

In certain embodiments, the nonwoven fabric material of the invention contains an amount of continuous filaments of spunbond PLA, comprised between about 40% and about 50% by weight, the remaining part being cellulose pulp. In certain embodiments, the nonwoven fabric material of the invention contains an amount of continuous filaments of spunbond PLA, comprised between about 40% and about 50% by weight and it is further provided with a hydrophilic coating, which is obtained by treatment of the nonwoven with wetting additives.

The wetting additives are those commonly employed in the field, such as cationic, anionic or non-ionic surfactants.

In certain embodiments, an anionic surfactant is used as a wetting agent. The said anionic surfactant is preferably an alkyl-polyglucoside ester. In one embodiment, the said alkyl polyglucoside ester is selected from disodium cocopolyglucose sulphosuccinate, disodium cocopolyglucose citrate, sodium cocopolyglucose tartrate or mixtures thereof. These surfactants are known with the trademark EUCAROL® AGE SS, EUCAROL® AGE EC and EUCAROL® AGE ET, respectively, and are commercially available from LAMBERTI spa. In the course of testing, this additive exhibited a great efficacy in terms of giving absorption capacity to the final product with a low dosage. In fact, the low dosage addition of additives leads to improved quality products as compared with those products obtained with high dosages, as will be discussed in detail below.

The basis weight of the nonwoven fabric material of the invention is in the range of between about 20 and about 60g/m². In particular, basis weight of between 30 and 60 g/m² is preferred, a basis weight of between 40 and 50 g/m² being the most preferred. However, when the nonwoven fabric material is provided with a hydrophilic coating, its basis weight will preferably be in the range of between 20 and 40 g/m².

In certain embodiments, the inventive nonwoven fabric material is a web structure that comprises more than one web, preferably 3 to 9 webs. With a number of webs in the range specified above, a more isotropic textile structure, and accordingly a maximized spatial layout of the fibres or filaments is achieved, which results into a maximized fabric-water contact surface.

Thereby, the water droplets are adsorbed by the structure within the small spaces resulting from the random distribution of the fibres or filaments.

In certain embodiments, the nonwoven fabric material is a tri-layered material comprising one internal layer of said water-absorbent, flushable material, and one upper and lower layer of said long fibres or continuous filaments of a biodegradable material, in order to create a sandwich structure.

The nonwoven fabric material of the invention can be produced by means of a process whose general steps are:
a) Laying on a support at least one layer of a biodegradable material in the form of long fibres or continuous filaments;
b) Laying on the said support or on the layer of step a) at least one layer of water-absorbent, flushable material;
c) Hydroentangling the said layers and drying the hydroentangled material;
d) Calendering the dried material of step c) to create a calendered pattern, which process is able to provide a balanced ratio of MD/CD average tensile strength to the nonwoven fabric material, the said balanced ratio of MD/CD average tensile strength being in the range of 1:1 and 4:1.

The long fibres or continuous filaments of step a) are as defined above.

The said spunbond filaments can be produced in line with the formation of the nonwoven fabric material or alternatively are made on a separate production line. The said spunbond filaments may be produced through extrusion by spinnerets of the above defined polymer materials so as to form continuous filaments. These filaments, on output from the spinnerets, are hit by a jet of compressed air that causes the elongation and the electrostatic charging thereof suck as to cause a mutual repulsion causing them to fall randomly onto a support (i.e. a conveyor belt). The continuous filament may be obtained by a spinning process by means of 1- to 5-orifices, preferably 23 orifices, spinner. In certain embodiments, step b) comprises laying a material in the form of short fibres as defined above. The hydroentanglement step c) is a conventional process, that allows obtaining a so called spunlace web structure. This process provides for entanglement of the web fibres, moving on a perforated or patterned screen, by means of high pressurized water jets. The water pressure generally increases from the first to the last injectors, pressures up to 2200 psi are used to direct the water jets onto the web. The impinging of the water jets on the web causes the entanglement of the fibres. Exhaust water is removed by vacuum from the screen, to avoid flooding of the web. The free water being entrapped among the fibres is then eliminated by means of drying.

The drying step is typically performed in a drying oven. The temperature within the oven depends on the speed at which the product passes there through and is to be adjusted suck that complete evaporation of the water is ensured. For example, if a product with 55 g/m² grammage is typically produced at 150 m/min, the temperature within the oven is to be set at about 120°C for complete water evaporation.

The calendering step is an essential step in the present invention. The calender has the basic function to partially bond the fibres/filaments composing the nonwoven and cutting the long fibres in order to weaken the strength of the material.

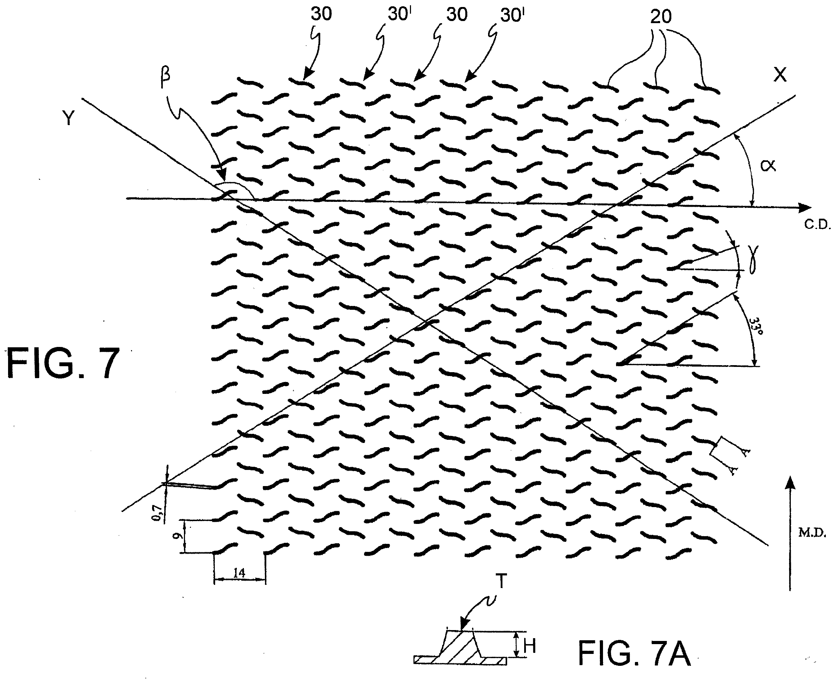

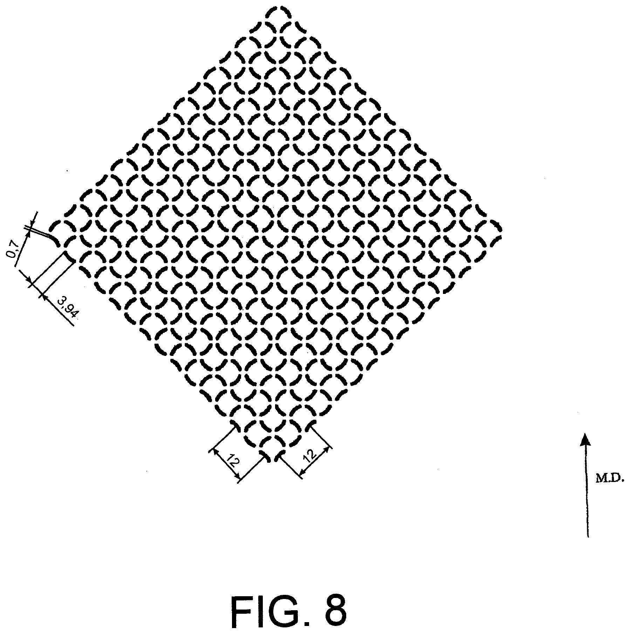

One of the two rollers, in the calender, is engraved, i.e. it has ribs in the form of dots or dashes evenly alternating with grooves. The shape, the distribution and the dimension of the dots and of the grooves strongly influences the mechanical properties of the material. In fact, it has been found that the calendering pattern according to the invention (see figures 7 and 7A) provides to the nonwoven fabric an improved balanced ratio of MD/CD average tensile strength if compared with a different calendering pattern according to the prior art (see figure 8).

The ratio of MD/CD average tensile strength for the nonwoven fabric material of the invention is in the range 1:1 - 4:1. Preferably, the MD/CD average tensile strength ratio is in the range 1:1 and 3:1. Moreover, the MD/CD average tensile strength ratio reaches particularly advantageous values when the nonwoven fabric material is wet or moistened, so that ratio values of between 1:1 and 2:1 can be achieved.

A preferred embodiment of the calendering pattern according to the invention is shown in figure 7 and 7A.

This calendering pattern, indicated with the numeral 1, comprises a plurality of ribs 20 that are shaped like a stretched S (stretched-S-shaped). In particular, the shape of these ribs comprises a first tract having a first curvature and a second tract having a second curvature being the opposite of the first curvature, the first and the second tracts being joined by a flexion point. The sentence "a second curvature being the opposite of the first curvature" means that if the first curvature is concave, the second curvature is convex, or vice versa.

In a more preferred embodiment, the angle γ formed between a line tangential to one of the two ends of a rib and a line tangential to the flexion point is from about 15° to about 25°, even more preferably about 20°. In a preferred embodiment, the ribs have a height H comprised between 0.5 and 0.9 mm, more preferably of about 0.7 mm, a free head T with a contact surface area for the fabric of from about 4 mm² to about 6 mm², more preferably of about 5 mm², and a distribution so that to cover 6-10%, more preferably about 8% of the surface of the roller.

The ribs 20 are arranged in lines along the machine direction (MD). Each line forms first modules 30 and second modules 30' in alternate alignment. Two first modules 30 that are separated by a second module 30' are defined "close modules". Analogously, two second modules 30' that are separated by a first module 30 are also defined "close modules".

In each of the first modules 30 the ribs 20 are inclined and have the same orientation, i.e. they form the same angle with the cross direction (CD). However, each first module 30 is adjacent to two second modules 30' having an opposite orientation, i.e. these latter form angles, with respect to the CD, that are supplementary to the angles formed by the first modules 30. In this way, diagonal lines X and Y are defined joining corresponding points of the ribs 20 in first modules 30 or second modules 30', which diagonal lines define the inclined orientation of the ribs 20 in such first modules 30 or second modules 30', respectively.

A first angle α is formed between the diagonal line X, defining the inclined orientation of the ribs in the first modules 30, and the cross-direction (CD), this angle a being less than 45°. In a preferred embodiment, this angle a is in the range of between 27° and 39°, more preferably between 31° and 35°, even more preferably about 33°.

Consequently, a second angle β is formed between the diagonal line Y, defining the inclined orientation of the ribs 20 in the second modules 30' and the cross-direction (CD), this second angle β being supplementary to the first angle α and being more than 135°, preferably between 153° and 141°, more preferably between 149° and 145°, even more preferably about 147°.

As said above, the distribution of the ribs 20 in the calendering pattern is an important feature. In certain embodiments, the pitch between corresponding points of adjacent ribs 20 in a same first or second module 30, 30' is comprised between 7 and 12 mm, preferably about 9 mm. Conversely, the pitch between corresponding points of ribs 20 in two close first modules 30 or in two close second modules 30' is comprised between 12 and 16 mm, preferably about 14 mm.

The calendering step is performed at a temperature comprised in the range from 0°C to 150°C, and at a nip pressure of in the range of 25 to 100 N/mm, preferably between 30 and 70 N/mm.

In certain embodiments, the process of the invention comprises a wetting step to confer hydrophilic properties to the material. The wetting step comprises treating the nonwoven fabric material with wetting additives as defined above.

Preferably, the wetting step is performed between the hydroentanglement step and the drying step.

The wetting treatment metbod can be selected from those used in common practice. They are, *inter alia:*
- Spraying: the product mixture will be sprayed on the fibres;
- coating: the product mixture will be applied by a contact roller spreading the products on the web surface;
- printing: the same as coating, but using a printing machine;
- impregnation; the web structure, either already built up or in an intermediate step, is dipped in a mixture of selected products, then the excess amount is wrung by means of a mangle or similar systems;
- foam coating: a mixture of selected products is mixed with a gas (usually air) in a high speed agitator until its physical state is that of a foam, and the foam is then applied to the web by conventional coating techniques.

The dosage of the wetting additive changes as a function of the fibres being used, the nonwoven features (density, fibre distribution, etc.) and desired level of adsorption (meaning the amount of adsorbed, retained water and the adsorption time, capillarity).

The nonwoven fabric material of the invention may receive various additives.

Several types of additives are added to the synthetic fibres or continuous filaments by the manufacturers, such as: lubricating additives to give smoothness and easy processability; antistatic additives to prevent damaging electrostatic currents that may degrade the product, or at worst, reduce the productivity of the machine; anti-foam additives to avoid that foam may be generated, especially upon the hydro-entanglement step.

In certain embodiments, the inventive process comprises one or more of the following final steps further to the ones described above, in order to increase or add additional characteristics to the end product: coloring or finishing of a chemical nature as the anti-pilling treatment, improvement of flame proof properties, substantially mechanical treatments such as napping, sanforizing, emerizing and the like.

The process will comprise usually a final step of winding the nonwoven fabric material to make a fabric bobbin.

The invention will be now further described by means of exemplary embodiments, with reference to the attached drawings. The drawings do not show the stations for adding the above defined additional substances, however the said stations are conventional and can be positioned at any point along the production line, preferably before the last bonding step.

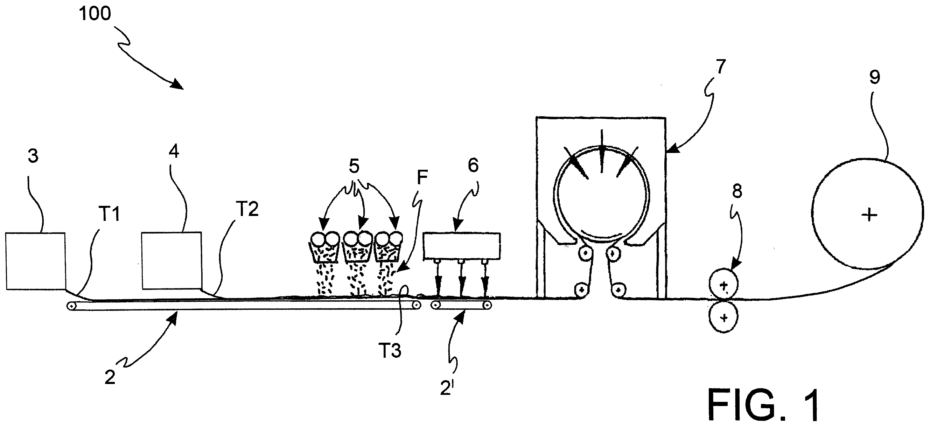

In figure 1 it is shown a first embodiment of a production line 100 for manufacturing the inventive material.

On a transporting means 2, typically a conveyor belt, a layer T1 of long fibres as defined above is deposited in form of a carded web by a feeding line 3. A second layer T2 of short fibres (i.e. cotton fibres) is fed in form of a carded web by a second feeding line 4. Subsequently, water-absorbent, short fibres F, typically cellulose pulp fibres, are laid through suitable dispensing means 5 to form a layer T3.

The web structure so created comprises from 40 to 60% by weight of layers T1 and T2 taken together and from 60 to 40% by weight of water-absorbent, short fibres. After the deposition of said water-absorbent, short fibres, the layered material is passed on a second transporting means 2' through hydroentangling means 6 of the conventional type.

The bonded nonwoven fabric is then dried passing through drying means 7.

The dried nonwoven fabric is subjected to calendering by means of the calender 8 which has the calenedring pattern depicted in figure 7.

Finally, the bonded nonwoven fabric material is wound on a receiving bobbin 9.

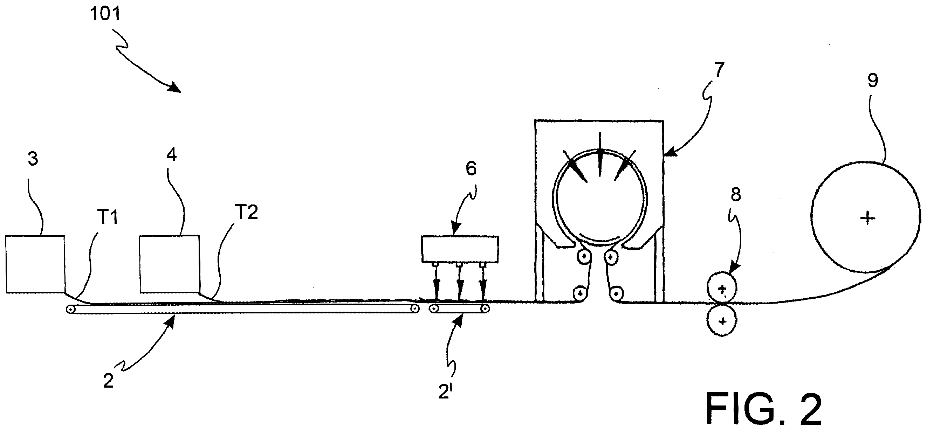

In figure 2 it is shown a second embodiment of a production line 101 for manufacturing the inventive material.

On a transporting means 2, typically a conveyor belt, a layer T1 of long fibres as defined above is deposited in form of a carded web by a feeding line 3. A second layer T2 of short fibres (i.e. cotton fibres) is fed in form of a carded web by a second feeding line 4. The sum of the amounts of layers T1 and T2 is about 100% by weight of the nonwoven fabric.

The layered material is then passed on a second transporting means 2' through hydroentangling means 6 of the conventional type.

The bonded nonwoven fabric is then dried passing through drying means 7.

The dried nonwoven fabric is subjected to calendering by means of the calender 8 which has the calenedring pattern depicted in figure 7.

Finally, the bonded nonwoven fabric material is wound on a receiving bobbin 9.

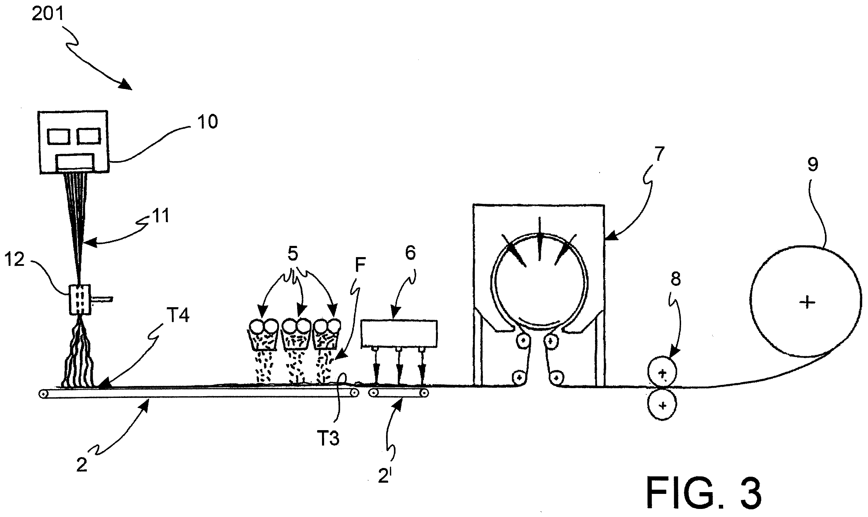

In figure 3 it is shown a third embodiment of a production line 201 for manufacturing the inventive material.

On a transporting means 2, typically a conveyor belt, a layer T4 of continuous filaments as defined above (i.e. PLA spunbond filaments) is deposited after being extruded by a suitable spinneret 10. The threads 11 exiting the orifices of the spinneret 10 are made to pass through a suction fan 12 positioned underneath the spinneret 10, in order to suck and convey the individual threads of extruded polymer in order to favour the bonding thereof into a single filament.

Subsequently, water-absorbent, short fibres F, typically cellulose pulp fibres, are laid through suitable dispensing means 5 to form a layer T3.

The web structure so created comprises from 40 to 50% by weight of continuous filaments and from 50 to 40% by weight of water-absorbent, short fibres.

The layered material is then passed on a second transporting means 2' through hydroentangling means 6 of the conventional type.

The bonded nonwoven fabric is then dried passing through drying means 7.

The dried nonwoven fabric is subjected to calendering by means of the calender 8 which has the calendaring pattern depicted in figure 7.

Finally, the bonded nonwoven fabric material is wound on a receiving bobbin 9.

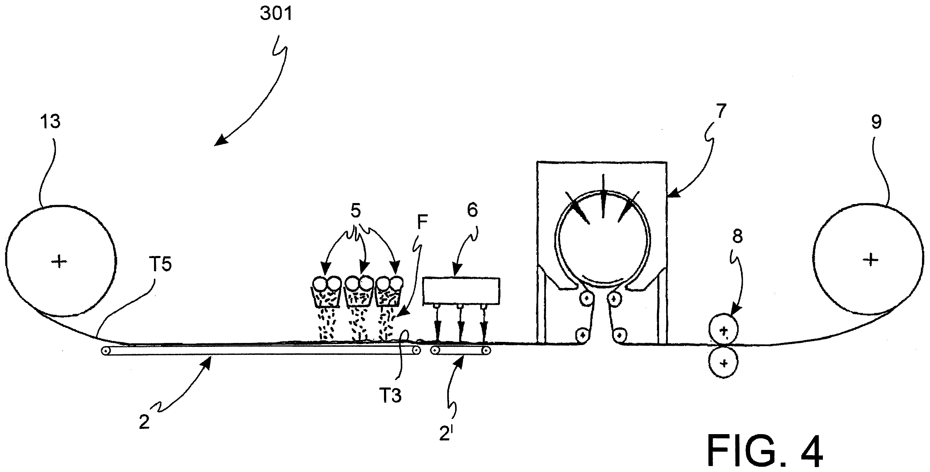

In figure 4 it is shown a fourth embodiment of a production line 301 for manufacturing the inventive material.

On a transporting means 2, typically a conveyor belt, a web T5 of a biopolymer as defined above is deposited by a bobbin 13.

Subsequently, water-absorbent, short fibres F, typically cellulose pulp fibres, are laid through suitable dispensing means 5 to form a layer T3.

The web structure so created comprises from 40 to 50% by weight of the biopolymer and from 50 to 40% by weight of water-absorbent, short fibres.

After the deposition of said water-absorbent, short fibres, the layered material is passed on a second transporting means 2' through hydroentangling means 6 of the conventional type.

The bonded nonwoven fabric is then dried passing through drying means 7.

The dried nonwoven fabric is subjected to calendering by means of the calender 8 which has the calendering pattern depicted in figure 7.

Finally, the bonded nonwoven fabric material is wound on a receiving bobbin 9.

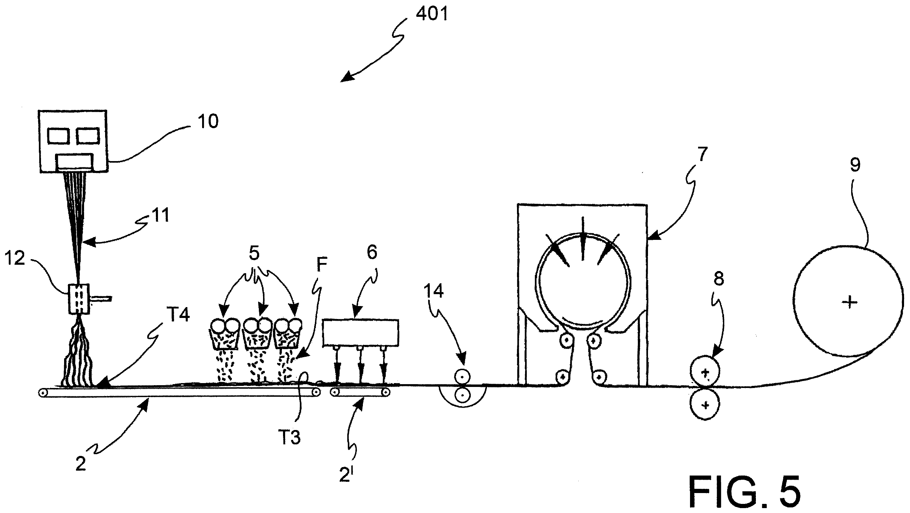

In figure 5 it is shown a fifth embodiment of a production line 401 for manufacturing the inventive material.

On a transporting means 2, typically a conveyor belt, a layer T4 of continuous filaments as defined above (i.e. PLA spunlaid filaments) is deposited after being extruded by a suitable spinneret 10. The threads 11 exiting the orifices of the spinneret 10 are made to pass through a suction fan 12 positioned underneath the spinneret 10, in order to suck and convey the individual threads of extruded polymer.

Subsequently, water-absorbent, short fibres F, typically cellulose pulp fibres, are laid through suitable dispensing means 5 to form a layer T3.

The web structure so created comprises from 40 to 50% by weight of continuous filaments and from 50 to 40% by weight of water-absorbent, short fibres.

The layered material is then passed on a second transporting means 2' through hydroentangling means 6 of the conventional type.

The bonded web is passed through an applicator 14 to give it a hydrophilic treatment.

The bonded nonwoven fabric is then dried passing through drying means 7.

The dried nonwoven fabric is subjected to calendering by means of the calender 8 which has the calendering pattern depicted in figure 7.

Finally, the bonded nonwoven fabric material is wound on a receiving bobbin 9.

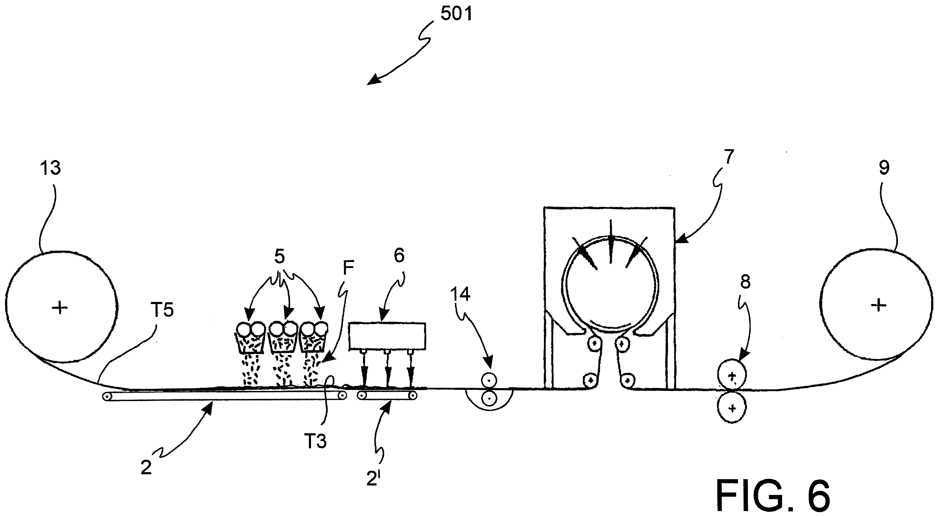

In figure 6 it is shown a sixth embodiment of a production line 501 for manufacturing the inventive material.

On a transporting means 2, typically a conveyor belt, a web T5 of a biopolymer as defined above is deposited by a bobbin 13.

Subsequently, water-absorbent, short fibres F, typically cellulose pulp fibres, are laid through suitable dispensing means 5 to form a layer T3.

The web structure so created comprises from 40 to 50% by weight of the biopolymer and from 50 to 40% by weight of water-absorbent, short fibres.

After the deposition of said water-absorbent, short fibres, the layered material is passed on a second transporting means 2' through hydroentangling means 6 of the conventional type.

The bonded nonwoven fabric is passed through an applicator 14 to give it a hydrophilic treatment.

The bonded nonwoven fabric is then dried passing through drying means 7.

The dried nonwoven fabric is subjected to calendering by means of the calender 8 which has the calendering pattern depicted in figure 7.

Finally, the bonded nonwoven fabric material is wound on a receiving bobbin 9.

The nonwoven fabric material of the invention can be wetted or moistened with several types of substances before packaging. The term "substance" as used herein means a solution, suspension, gel, emulsion or other wet formulation of a substance for personal care, household application or topic medical use or mixtures thereof, as the case may be.

Non-limiting examples of a substance for personal care are: solutions or lotions for personal hygiene and/or sanitization, skin creams, lotions or waxes, tanning creams or lotions, sunscreen formulations, insect repellent formulations, deodorants, perfumes, antibacterial, antiviral and/or antifungal formulations, make-up removing lotions or solutions and cosmetic products in general.

Non-limiting examples of a substance for household application are: detergent solutions or emulsions, waxes for ceramic or wooden floor, waxes for wood furniture surfaces, surface disinfectants, antibacterial, antiviral and/or antifungal products for household use, metal polishing emulsions, solutions or creams and cleaning formulations in general.

Non-limiting examples of a substance for topic medical use are: skin disinfectants, skin antibacterial, antiviral and/or antifungal substances, cicatrizing formulations and in general any drug formulation that can be administered by topical application, or sanitizing compositions for medical facilities, appliances or devices.

In particular, when the substance is a viscous substance as may be the case with emulsions, suspensions, gels, creams or waxes, it is important that the wetting agent is particularly efficient to impart hydrophilicity to the nonwoven fabric and to favor a distribution of the substance in the wipe. In one embodiment, with these viscous substances a nonwoven treated with an alkyl-polyglucoside ester is advantageously used. More preferably, disodium cocopolyglucose solphosuccinate can be used, due to its fluidifying effect.

The inventive web structure can be impregnated with the said substance by any known method as the ones described above for wetting treatment, with the proviso that the impregnated nonwoven fabric product of the invention is packaged while still wet. In particular, delivery of the substance on the web by means of suitable nozzles can advantageously be used. Impregnation as well as spraying are suitable methods for solutions or lotions.

The inventive textile product can be for example in the form of cloths, rags and similar fabrics, wipes, etc.

The nonwoven fabric material of the invention has various advantages over the prior art materials.

First of all, the present nonwoven fabric is soft and has a bulky appearance. A good thickness of the nonwoven, particularly when the fabric is wet or moistened, is recommended because it gives the customer an attractive appearance. This features is achieved by the nonwoven fabric of the invention in particular as PLA is contained in an amount greater than 10% by weight.

As the nonwoven is calendered, the PLA melts and its crystalline structure is modified. This allows the bonding line to be weakened, which is helpful to increase dispersibility of the fabric.

As PLA has a lower melting point with respect to other thermoplastics, it is possible to calender the nonwoven at lower temperatures and nip pressures. This allows a save of energy, thus lowering the production costs and the stress which the material is subjected to.

Additionally, PLA is less stretchable than other thermoplastics, like polypropylene, and this feature renders the fabric more dispersible.

The environmental compatibility is also improved. The presence of PLA in the material also allows the patterned design to be readily visible on the wet product, which is also considered as an improvement of the product appearance.

The nonwoven fabric of the invention has also very good mechanical properties. This means that the present nonwoven fabric has a good balance between tensile strength, both in the dry and in the wet state, and water dispersibility.

In certain embodiments, the use of PLA in amounts greater than 30% by weight seems to improve the mechanical properties of the fabric in the wet state. Table I illustrates four different trials using different compositions of the material. In all cases, the fabric was manufactured by using a process as described above, like the one depicted in figure 1, where the feeding lines 3 & 4 are fed by a carded web with a blend of viscose and PLA, but without the calendering step. Percentages are by weight.

The base weight has been measured using the test method WSP 130.1 (ISO reference 9073-1:1989).

The thickness has been measured using the test method WSP 120.6 (ISO reference 9073 -2:1995).

The MD- and CD-tensile strengths have been determined using the test method WSP 110.4 (ISO reference 9073-3:1989).

**Table I**

| | **1** | **2** | **3** | **4** |
|---|---|---|---|---|
| | 45% pulp | 18% pulp | 18% pulp | 45% pulp |
| | 36% | 64% | 18% | 18% |
| | 18% PLA | 18% PLA | 64% PLA | 36% PLA |
| Base weight (g/m²) | 54.5 | 57.4 | 55.9 | 56.5 |
| Dry Thickness | 0.51 | 0.48 | 0.56 | 0.53 |
| Wet Thickness | 0.50 | 0.50 | 0.53 | 0.47 |
| Dry MD-strength (N/5cm) | 73.8 | 106.5 | 91.4 | 81.4 |
| Dry CD-strength (N/5cm) | 21.7 | 34.1 | 31.3 | 28.3 |
| Wet MD-strength (N/5 cm) | 32.8 | 48.3 | 65.6 | 50.5 |
| Wet CD-strength (N/5 cm) | 11.0 | 17.6 | 21.7 | 17.9 |
| Dry MD/CD strength | 3.4 | 3.1 | 2.9 | 2.87 |
| Wet MD/CD strength | 2.98 | 2.74 | 3.02 | 2.82 |

The data reported in Table I show that passing from dry to wet fabric both the MD- and CD-tensile strength decrease. However, when the content of PLA is above 30% by weight, this decrease is smaller and still good values of tensile strength are achieved in the wet material.

In all instances, the MD/CD tensile strength ratio is about 3 or less, which reveals a very good balance between these strengths in the two directions. As said above, this feature allows the fabric to be resistant to rips both during its manufacture (rips along MD direction) and during customer's extraction from the package (rips along CD direction).

Table II illustrates a comparison between a nonwoven fabric material with the calendering pattern shown in figure 7 and the same material with a calendering pattern of the prior art as shown in figure 8.

It can be seen that the pattern of figure 7 allows achieving a MD/CD tensile strength ratio of 2.4 which is very advantageous if compared with the prior art pattern, wherein a value of 7.1 was measured.

This result is uncommon for the prior art products, particularly for the ones based on biodegradable, water-dispersible materials.

**Table II**

| | **5** | **6 (prior art)** |
|---|---|---|
| | 60% viscose | 60% viscose |
| | 40% cell. pulp | 40% cell. pulp |
| MD-tensile strength (N/5cm) | 24.16 | 30.87 |
| CD-tensile strength (N/5cm) | 10.12 | 4.35 |
| MD/CD ratio | 2.4 | 7.1 |

In fact, the calendering pattern according to figure 7 involves bonding lines to be created on the material in such an extent and orientation to impart tensile resistance along all the directions. However, this does not give adverse effects regarding the water-dispersibility of the fabric, because when the material is flushed and subject to a strong mechanical stress, like in a pump turbine, the bonding lines work as breaking lines for the material, that is then cut into small pieces that can disperse easily.

Therefore, such a nonwoven fabric material gives indeed a favorable balance between these properties.

It will be appreciated that only particular embodiments of the present invention have been described herein, to which those skilled in the art will be able to make any and all modifications necessary for its adjustment to specific applications, without however departing from the scope of protection of the present invention as defined in the annexed claims.

## Claims

1. A nonwoven fabric material comprising at least one layer of long fibres of a biodegradable material having a length varying from about 4 mm to about 60 mm, or of continuous filaments of a biodegradable material, and at least one layer of fibers of a water-absorbent material, **characterised in that** the nonwoven fabric material has been calendered to partially bond the fibres or filaments composing the nonwoven and cutting the long fibres or continuous filaments in order to weaken the strength of the material, to yield a ratio of MD/CD average tensile strength in the range of 1:1 and 4:1, and the biodegradable material comprises polylactic acid in an amount greater than 10% by weight, based on the nonwoven fabric material.

2. The nonwoven fabric material according to claim 1, wherein the amount of polylactic acid is greater than 30% by weight.

3. The nonwoven fabric material according to claim 1 or 2, wherein the nonwoven fabric material of the invention is a multi-layered material comprising at least one layer of long fibres or of continuous filaments of a biodegradable material and at least one layer of short fibres or of shortcut fibres of the same or of a different material.

4. The nonwoven fabric material according to any one of claims 1 to 3, wherein the long fibres material comprises polylactic acid (PLA), optionally as bicomponent fiber, and viscose, lyocell, or biopolymers from cereals or plant fibres.

5. The nonwoven fabric material according to any one of claims 1 to 4, wherein the said water-absorbent material or the said short fibre material is selected from cellulose pulp, cotton and mixtures thereof and wherein the said shortcut fibre material is selected from viscose, lyocell and a synthetic fibre.

6. The nonwoven fabric material according to claim 5, wherein the amount of long fibres material is comprised in the range of 40% to 60% by weight and the amount of cellulose pulp in the nonwoven fabric material is comprised in the range of 40% to 60% by weight.

7. The nonwoven fabric material according to any one of claims 1 to 5, which contains a total amount of long fibres material and cotton of about 100% by weight and no cellulose pulp is contained.

8. The nonwoven fabric material according to any one of claims 1 to 5, wherein the nonwoven fabric material contains an amount of continuous filaments of spunbond PLA, comprised between about 40% and about 50% by weight, the remaining part being cellulose pulp, the nonwoven fabric material being optionally provided with a hydrophilic coating.

9. The nonwoven fabric material according to any one of claims 1 to 8, wherein the MD/CD average tensile strength ratio when the nonwoven fabric material is wet or moistened is between 1:1 and 2:1.

## Patentansprüche

1. Vliesstoffmaterial, umfassend mindestens eine Schicht von Langfasern von einem bioabbaubaren Material mit einer Länge, die von etwa 4 mm bis etwa 60 mm variiert, oder von kontinuierlichen Filamenten von einem bioabbaubaren Material, und mindestens eine Schicht von Fasern von einem Wasser-absorbierenden Material, **dadurch gekennzeichnet, dass** das Vliesstoffmaterial zum teilweisen Binden der Fasern oder Filamente, die das Vlies ausmachen, kalandriert wurde und Schneiden der Langfasern oder kontinuierlichen Filamente, um die Festigkeit von dem Material zu schwächen, um ein Verhältnis von mittlerer MD/CD-Zugfestigkeit im Bereich von 1:1 und 4:1 zu ergeben, und das bioabbaubare Material Polymilchsäure in einer Menge größer als 10 Gew.-%, basierend auf dem Vliesstoffmaterial, umfasst.

2. Vliesstoffmaterial nach Anspruch 1, wobei die Menge von Polymilchsäure größer als 30 Gew.-% ist.

3. Vliesstoffmaterial nach Anspruch 1 oder 2, wobei das Vliesstoffmaterial der Erfindung ein mehrschichtiges Material ist, umfassend mindestens eine Schicht von Langfasern oder von kontinuierlichen Filamenten von einem bioabbaubaren Material und mindestens eine Schicht von Kurzfasern oder von kurz geschnittenen Fasern von dem gleichen oder von einem anderen Material.

4. Vliesstoffmaterial nach einem der Ansprüche 1 bis 3, wobei das Langfasermaterial Polymilchsäure (PLA), gegebenenfalls als Biokomponentenfaser, und Viskose, Lyocell oder Biopolymere von Getreide- oder Pflanzenfasern umfasst.

5. Vliesstoffmaterial nach einem der Ansprüche 1 bis 4, wobei das Wasserabsorbierende Material oder das Kurzfasermaterial aus Zellulosezellstoff, Baumwolle und Gemischen davon ausgewählt ist und wobei das kurz geschnittene Fasermaterial aus Viskose, Lyocell und einer synthetischen Faser ausgewählt ist.

6. Vliesstoffmaterial nach Anspruch 5, wobei die Menge von Langfasermaterial im Bereich von 40% bis 60 Gew.-% liegt und die Menge von Zellulosezellstoff in dem Vliesstoffmaterial in dem Bereich von 40% bis 60 Gew.-% liegt.

7. Vliesstoffmaterial nach einem der Ansprüche 1 bis 5, das eine Gesamtmenge von Langfasermaterial und Baumwolle von etwa 100 Gew.-% enthält und kein Zellulosezellstoff enthalten ist.

8. Vliesstoffmaterial nach einem der Ansprüche 1 bis 5, wobei das Vliesstoffmaterial eine Menge von kontinuierlichen Filamenten von Spunbond-PLA zwischen etwa 40% und etwa 50 Gew.-% enthält, wobei der verbleibende Teil Zellulosezellstoff ist, wobei das Vliesstoffmaterial gegebenenfalls mit einer hydrophilen Beschichtung versehen ist.

9. Vliesstoffmaterial nach einem der Ansprüche 1 bis 8, wobei das mittlere MD/CD-Zugfestigkeits-Verhältnis, wenn das Vliesstoffmaterial nass oder befeuchtet ist, zwischen 1:1 und 2:1 liegt.

## Revendications

1. Matériau textile non tissé comprenant au moins une couche de fibres longues en un matériau biodégradable ayant une longueur variant d'environ 4 mm à environ 60 mm, ou de filaments continus en un matériau biodégradable, et au moins une couche de fibres d'un matériau absorbant l'eau, **caractérisé en ce que** le matériau textile non tissé a été calandré pour lier partiellement les fibres ou filaments composant le non-tissé et couper les fibres longues ou filaments continus afin d'affaiblir la résistance du matériau, pour obtenir un rapport de résistance moyenne à la traction MD/CD dans la plage de 1:1 et 4:1, et le matériau biodégradable comprend de l'acide polylactique en une quantité supérieure à 10 % en poids, sur la base du matériau textile non tissé.

2. Matériau textile non-tissé selon la revendication 1, dans lequel la quantité d'acide polylactique est supérieure à 30 % en poids.

3. Matériau textile non-tissé selon la revendication 1 ou 2, dans lequel le matériau textile non-tissé de l'invention est un matériau multicouche comprenant au moins une couche de fibres longues ou de filaments continus d'un matériau biodégradable et au moins une couche de fibres courtes ou de fibres coupées courtes du même matériau ou d'un matériau différent.

4. Matériau textile non tissé selon l'une quelconque des revendications 1 à 3, dans lequel le matériau de fibres longues comprend de l'acide polylactique (PLA), optionnellement comme fibre bi-composants, et de la viscose, du lyocell ou des biopolymères de céréales ou de fibres végétales.

5. Matériau textile non tissé selon l'une quelconque des revendications 1 à 4, dans lequel ledit matériau absorbant l'eau ou ledit matériau à fibres courtes est choisi parmi la pâte de cellulose, le coton et leurs mélanges, et dans lequel ledit matériau à fibres coupées courtes est choisi parmi la viscose, le lyocell et une fibre synthétique.

6. Matériau textile non tissé selon la revendication 5, dans lequel la quantité de matériau à fibres longues est comprise dans l'intervalle de 40 % à 60% en poids et la quantité de pâte de cellulose dans le matériau textile non tissé est comprise dans l'intervalle de 40 % à 60 % en poids.

7. Matériau textile non tissé selon l'une quelconque des revendications 1 à 5, qui contient une quantité totale de matériau à fibres longues et de coton d'environ 100 % en poids et qui ne contient pas de pâte de cellulose.

8. Matériau textile non-tissé selon l'une quelconque des revendications 1 à 5, dans lequel le matériau textile non-tissé contient une quantité de filaments continus de PLA filés-liés, compris entre environ 40 % et environ 50 % en poids, la partie restante étant de la pâte de cellulose, le matériau textile non tissé étant optionnellement pourvu d'un revêtement hydrophile.

9. Matériau textile non tissé selon l'une quelconque des revendications 1 à 8, dans lequel le rapport de résistance moyenne à la traction MD/CD lorsque le matériau textile non tissé est humide ou humidifié se situe entre 1:1 et 2:1.
